# EUROPEAN PATENT SPECIFICATION

(11) **EP 1 926 320 B1**
(45) Date of publication and mention of the grant of the patent: **19.10.2011**
(21) Application number: 07721641.4
(22) Date of filing: 15.05.2007
(51) Int. Cl.: H04N 7/173

(54) **Method, server and system for transmitting electronic service guide**
Verfahren, Server und System zur Übertragung eines elektronischen Dienstführers
Procédé, serveur et système de transmission d'un guide de service électronique

(30) Priority: 22.08.2006 CN 200610121786
(43) Date of publication of application: 28.05.2008
(73) Proprietor: Huawei Technologies Co., Ltd., Shenzhen, Guangdong Province 518129 (CN)
(72) Inventor: ZHANG, Jie, Shenzhen Guangdong 518129 (CN); SHI, Teng, Shenzhen Guangdong 518129 (CN); ZHANG, Chuxiong, Shenzhen Guangdong 518129 (CN)
(74) Representative: Thun, Clemens
(86) International application number: PCT/CN2007/070018
(87) International publication number: WO 2008/025261

(56) References cited:
- WO-A-2006/036276
- WO-A1-2006/066617
- CN-A- 1 308 815
- CN-A- 1 516 965
- US-A1- 2006 092 052

## Description

### Field of the Invention

The present invention relates to technologies of mobile video broadcast, and particularly, to a method, an Electronic Service Guide (ESG) server and a system for transmitting an ESG

### Background of the Invention

The service of mobile video broadcast is a novel mobile service. The mobile service may transmit video content to a mobile user via a broadcast network, a mobile communication network and a mobile terminal.

The technology of ESG is an important application layer technology in the mobile video broadcast. An ESG provides a user with a direct user interface and a visit guide. The user uses the direct user interface and the visit guide for viewing the material associated with various services, browsing a video channel, a playbill and a price list, selecting and purchasing one or more products listed on the price list, and logging on a website to browse web pages. The ESG is composed of various fragments based on their inherent logical relations. The information of one program is generally associated with multiple fragments. A server and a terminal both process ESG with a fragmented mechanism

A user may acquire an ESG via multiple measures, one of which is to acquire the ESG through an interactive channel. In a conventional method, the measure of transmitting the ESG via the interactive channel is defined by TV-Anytime (TV-A) and BCAST protocol.

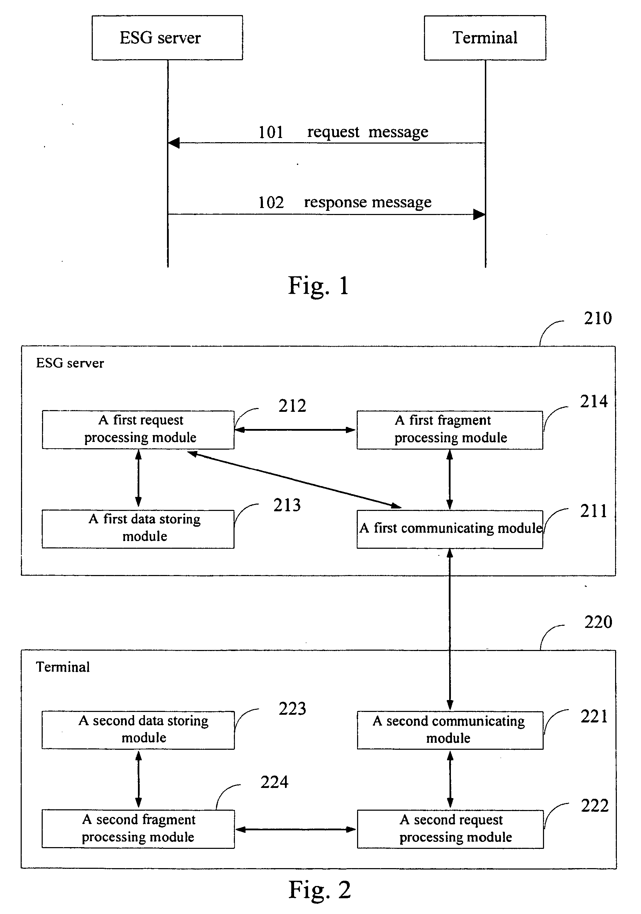

Figure 1 is a simplified flowchart illustrating the signaling interaction for transmitting the ESG via an interactive channel according to a conventional method. As shown in Figure 1, the procedure for the signaling interaction includes the following processes.
Process 101: A terminal requests to obtain an ESG from an ESG server via an interactive channel.

Process 102: The ESG server returns a response message to the terminal, and carries all fragments associated with the content of the ESG requested by the user in the response message.

Up to now, the procedure for obtaining the ESG via the interactive channel is finished.

As can be seen from the above technical solution, the conventional technology for transmitting the ESG has the following disadvantages.

When the content of the ESG is abundant, the ESG server is required to transmit a message including a large amount of data to the terminal once. Therefore, the probability of transmission error is increased greatly, and the reliability and the efficiency of the transmission are reduced.

Moreover, the processing capability of the terminal is greatly impacted if the response message returned from the ESG server is large. The ESG may be processed and displayed to the user merely when all content of the response message has been completely received, which leads to a long delay in the display and decreases processing efficiency.

In addition, a portion of fragments may be saved by the terminal. But, the terminal is still required to receive all fragments from the response message, which makes the terminal to perform unnecessary processing and wastes the resources of the terminal.

To sum up, the conventional technology for transmitting the ESG has worse reliability and lower transmission efficiency.

A WO patent application (WO 2006/036276 A) discloses a method for maintaining program-guide records comprises steps of requesting a program-guide index, receiving the program-guide index, and determining whether there exists any new program-guide record based on the received program-guide index. If there are any updated or new PG records, requests for the new program-guide record and receives the program-guide record.

### Summary

The present invention provides a method for transmitting an Electronic Service Guide, ESG. The method includes:
receiving an ESG request message sent from a terminal;
sending a list of to-be-transmitted fragments which is configured according to information of the to-be-transmitted fragments to the terminal, wherein the list of to-be-transmitted fragments comprises a list of fragment information and a session ID, wherein the session ID is used for identifying the ESG request message sent from the terminal;
receiving one fragment request message sent from the terminal;
determining fragments required by the terminal;
sending the fragments required by the terminal to the terminal;
and **characterized in that** the fragment request message carries the IDs of fragments which are not held by the terminal and the session ID, or carries the IDs of fragments which are saved by the terminal and the session ID, and the step of determining fragments required by the terminal comprises:
searching the list of fragment information; and
determining the fragments required by the terminal according to the session ID, and at least one of the IDs of fragments which are not held by the terminal and the IDs of fragments which are saved by the terminal; and after the process of sending the fragments required by the terminal to the terminal, the method further comprises:
receiving, by the server, an acknowledgement message returned by the terminal;
determining whether the transmission of the fragments required by the terminal has been completed after receiving the acknowledgement message;
if the transmission of fragments has not been finished, proceed to the process of sending the fragments required by the terminal to the terminal, so that the fragments which are not sent to the terminal in the list of fragment information are sent to the terminal.

Furthermore the present invention provides an Electronic Service Guide (ESG) server (210). The ESG server includes:
a first communicating module (211), configured to receive an ESG request message and one fragment request message from a terminal;
a first.request processing module (212), configured to search a first data storing module (213) to obtain information of to-be-transmitted fragments according to the ESG request message, and send the information of the to-be-transmitted fragments to a first fragment processing module (214); and search the first data storing module (213) to determine the fragments required by the terminal (220) according to the fragment request message, and send the fragments required by the terminal (220) via the first communicating module (211);
the first data storing module (213), configured to store the fragments,
the first fragment processing module (214), configured to configure a list of to-be-transmitted fragments according to the information of to-be-transmitted fragments, wherein the list of to-be-transmitted fragments comprises a list of fragment information and a session ID, wherein the session ID is used for identifying the ESG request message sent from the teminal (220), and send the list of the to-be-transmitted fragments via the first communicating module (211);
and **characterized in that** the fragment request message carries the IDs of fragments which are not held by the terminal and the session ID, or carries the IDs of fragments which are saved by the terminal and the session ID, and the first request processing module (212) configured to search the first data storing module (213) to determine the fragments required by the terminal according to the fragment request message is further configured:
to search the list of fragment information; and
to determine the fragments required by the terminal according to the session ID, and at least one of the IDs of fragments which are not held by the terminal and the IDs of fragments which are saved by the terminal; and
the server further comprises a unit which is-configured to receive an acknowledgement message returned by the terminal, and a unit which is configured to determine whether the transmission of the fragments required by the terminal has been completed after receiving the acknowledgement message; and
the first request processing module (212) is further configured to send the fragments required by the terminal (220) if the transmission of fragments has not been finished, so that the fragments which are not sent to the terminal in the list of fragment information are sent to the terminal.

As can be seen from above technical solution, at first, a terminal sends an ESG request message to a server; and then, receives the information of all to-be-transmitted fragments, and requests the server for its required fragments according to the information of the to-be-transmitted fragments; at last, receives its required fragments which are sent from the server in several times. In this way, repetitious transmission avoids that the server sends a message including a large mount of data to the terminal once, so that the reliability and efficiency of the transmission is improved.

### Brief Description of the Drawings

Figure 1 is a simplified flowchart illustrating the signaling interaction for transmitting an ESG via an interactive channel according to a conventional method.
Figure 2 is a schematic diagram illustrating the structure of an inventive system for transmitting an ESG.
Figure 3 is a simplified flowchart illustrating the signaling interaction for transmitting an ESG.
Figure 4 is a simplified flowchart illustrating a method for transmitting an ESG
Figure 5 is a simplified flowchart illustrating an inventive method for transmitting an ESG

### Detailed Description of the Invention

The present invention is further described as follows in detail with reference to the accompanying drawings so as to make the technical solution and merits thereof more apparent.

Figure 2 is a schematic diagram illustrating the structure of an inventive system for transmitting an ESG. Referring to Figure 2, the system consists of an ESG server 210 and a terminal 220. The ESG server 210 consists of a first communicating module 211, a first request processing module 212, a first data storing module 213 and a first fragment processing module 214. The terminal 220 consists of a second communicating module 221, a second request processing module 222, a second data storing model 223 and a second fragment processing module 224.

The principle of the ESG system as shown in Figure 2 is described as follows. The second request processing module 222 of the terminal 220 generates an ESG request message according to an ESG request of a user, and sends the ESG request message to the first communicating module 211 of ESG server 210 via the second communicating module 221.

The first communicating module 211 of the ESG server 210 sends the ESG request message received from the terminal 220 to the first request processing module 212.

The first request processing module 212 of the ESG server 210 searches the first data storing module 213 according to the ESG request message received from the first communicating module 211, determines to-be-transmitted fragments associated with the ESG requested by the terminal 220, and transmits the result of the searching to the first fragment processing module 214.

The first fragment processing module 214 of the ESG server 210 generates a list of to-be-transmitted fragments according to the result of the searching received from the first request processing module 212, takes the generated list of the to-be-transmitted fragments as the response message of the ESG request message, and sends the response message to the terminal 220 via the first communicating module 211.

The second communicating module 221 of the terminal 220 receives the response message sent from the ESG server 210, and sends the response message to the second fragment processing module 224 via the second request processing module 222.

The second fragment processing module 224 of the terminal 220 searches the second data storing module 223 of the terminal 220 according to the list of the to-be-transmitted fragments carried in the received response message, determines the fragments required by the terminal, and sends information of the fragments required by the terminal to the second request processing module 222.

The second request processing module 222 of the terminal 220 generates and sends a request message to the ESG server 210 according to the information of the fragments required by the terminal and received from the second fragment processing module 224.

The first communication processing module 211 of the ESG server 210 sends the request message carrying the information of the fragments to the first request processing module 212. The request message is received from terminal 220.

The first request processing module 212 of the ESG server 210 searches the first data storing module 213 according to the information of the fragments required by the terminal carried in the received request message, generates a response message according to the result of searching, and sends the response message to the terminal 220 via the first communicating module 211.

The principle of the ESG system as shown in Figure 2 is described hereinabove. In the system shown in Figure 2, the interaction between the ESG server 210 and the terminal 220 is generally implemented via a mobile communication network. The mobile communication network may include a Global System for Mobile communication (GSM) network, a General Packet Radio Service (GPRS) network or a Wideband Code Division Multiple Access (WCDMA) network. The message interaction between an ESG server and a terminal may be transmitted by such effective measure as Hypertext Transfer Protocol (HTTP), Wireless Application Protocol (WAP), short message or the like.

In the present invention, a terminal may request a complete ESG while requesting an ESG server for an ESG, or request an ESG meeting a designated condition via a condition search.

After a terminal obtains a list of to-be-transmitted fragments, and determines its required fragments, two methods for the terminal requesting an ESG server for the required fragments are provided. One method is that the terminal sends multiple fragment request messages to the ESG server. The required fragments are designated in each fragment request message.

The other method, the inventive method, is that the terminal merely sends one fragment request message to the ESG server to notify the ESG server of the information of fragments saved or not saved by the terminal and the number of the fragments that the terminal requires the ESG server to return. The ESG server determines the to-be-transmitted fragments to the terminal. And the terminal returns an acknowledgement message to the ESG server after receiving fragments sent from the ESG server each time.

The present invention further provides a method for transmitting an ESG while providing the ESG system shown in Figure 2. The method for transmitting the ESG is described as follows.

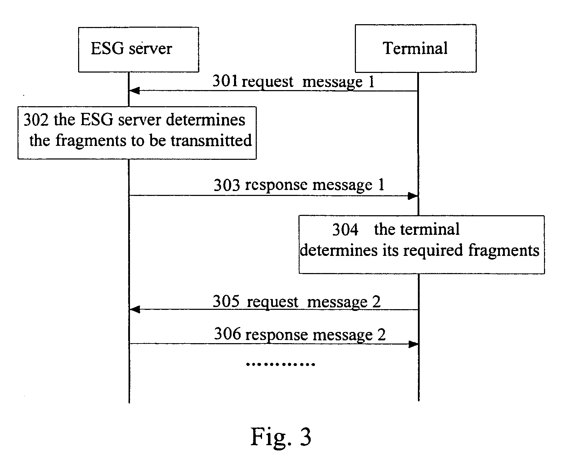

Figure 3 is a simplified flowchart illustrating the signaling interaction for transmitting an ESG. As shown in Figure 3, the procedure of the signaling interaction includes following processes.

Process 301: A terminal sends an ESG request message to an ESG server via an interactive channel.

In this process, the terminal may send to the ESG server an ESG request message for acquiring a complete ESG or a condition search request message for acquiring an ESG meeting a condition.

Process 302: The ESG server determines to-be-transmitted fragments associated with the ESG according to the ESG requested by the terminal.

Process 303: The ESG server sends to the terminal a response message carrying the information of all to-be-transmitted fragments.

In this process, the ESG server may configure a list of the to-be-transmitted fragments according to the information of the to-be-transmitted fragments, and send the list of the to-be-transmitted fragments to the terminal.

Process 304: The terminal determines its required fragments according to the received information of the to-be-transmitted fragments.

Process 305: The terminal requests the ESG server for its required fragments.

Process 306: The ESG server sends the fragments required by the terminal to the terminal according to the request of the terminal.

Perform Process 305 to Process 306 repeatedly until all fragments requested by the terminal are transmitted, and terminate the procedure.

The procedure of the signaling interactive shown in Figure 3 may be applied to various application scenes for transmitting an ESG. The method for transmitting an ESG is hereinafter described in detail with respect to three embodiments, wherein the third embodiment describes the method of the present invention and the first and second embodiments do not form part of the present invention.

The first embodiment:

In this embodiment, it is supposed that there is no ESG fragment saved in a terminal. The terminal requests an ESG server for a complete ESG. The terminal designates its required fragments each time while requesting the ESG server for the fragments according the information of the to-be-transmitted fragments returned by the ESG server.

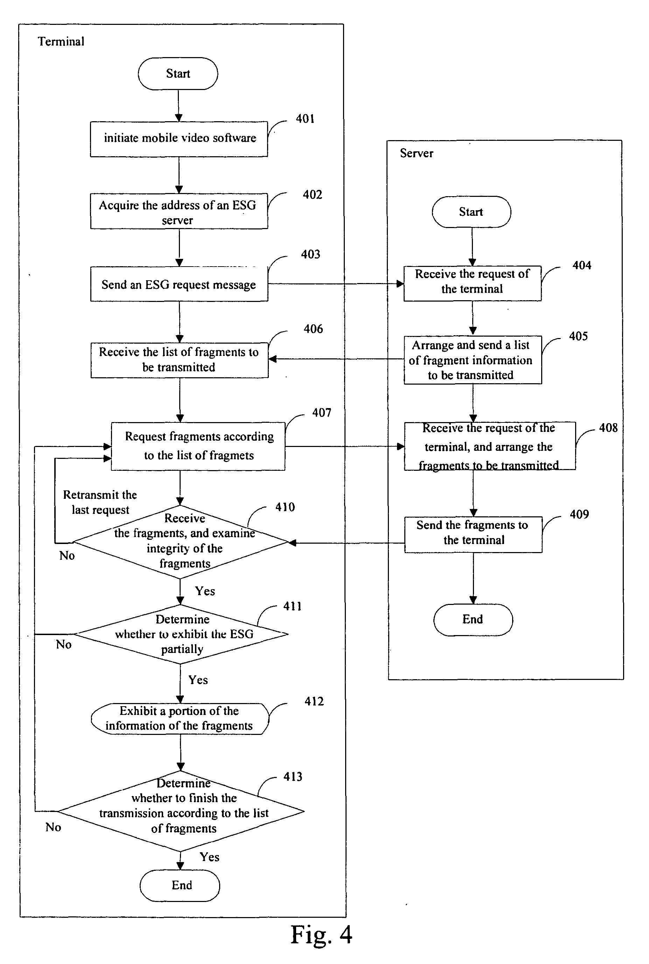

Figure 4 is a simplified flowchart illustrating a method for transmitting an ESG in accordance with the first embodiment. Referring to Figure 4, the method includes the processing of a terminal and an ESG server. In particularly, the processing includes the following processes.
Process 401: A terminal initiates mobile video software.
Process 402: The terminal acquires the address of an ESG server.
Process 403: The terminal sends an ESG request message to the ESG server.
In this process, the terminal requests the ESG server for a complete ESG.
Process 404: The ESG server receives the request sent from terminal.
Process 405: The ESG server determines to-be-transmitted fragments according the request sent from the terminal, configures a list of to-be-transmitted fragments according to the information of the to-be-transmitted fragments and carries the list in a response message, and sends the response message to the terminal.

In this process, the list of the to-be-transmitted fragments configured by the ESG server includes at least one of the sum of the to-be-transmitted fragments, the list of fragment information and the maximum number of fragments that may be applied by the terminal each time.

The list of fragment information may include at least one of ID and version information of a to-be-transmitted fragment, starting position of the fragment in the message, existing time of the fragment, size of the fragment, code format of fragment and the detailed information of the fragment. When the ESG server determines to send all fragments to the terminal directly, the value of the field, i.e. the starting position of the fragment in the message, represents the starting position of each fragment in the field, i.e the detailed information of the fragment.

In this embodiment, it is supposed that the ESG requested by the terminal includes five fragments and the ESG server sends at most two fragments to the terminal each time. The ESG server may configure the list of fragment information according to the structure as shown in Table 1.

**Table 1**

| Field name | | Value |
|---|---|---|
| FragmentSum | | 5 |
| FragmentInfoList | | |
| | FragmentID[0] | 1 |
| | FragmentVersion[0] | 1.0 |
| | ValidFrom | 200607082300 |
| | ValidTo | 200607082400 |
| | FragmentSize | 675 |
| | FragmentEncoding | UTF-8 |
| | FragmentID[1] | 3 |
| | FragmentVersion[1] | 1.0 |
| | ValidFrom | 200607082300 |
| | ValidTo | 200607082400 |
| | FragmentSize | 676 |
| | FragmentEncoding | UTF-8 |
| | FragmentID[2] | 2 |
| | FragmentVersion[2] | 1.0 |
| | ValidFrom | 200607082300 |
| | ValidTo | 200607082400 |
| | FragmentSize | 679 |
| | FragmentEncoding | UTF-8 |
| | FragmentID[3] | 4 |
| | FragmentVersion[3] | 1.0 |
| | ValidFrom | 200607082300 |
| | ValidTo | 200607082400 |
| | FragmentSize | 678 |
| | FragmentEncoding | UTF-8 |
| | FragmentID[4] | 5 |
| | FragmentVersion[4] | 1.0 |
| MaxRequestNum | | 2 |

As shown in Table 1, the signification of each field is shown in Table 2.

**Table 2**

| Field name | | Signification |
|---|---|---|
| FragmentSum | | Fragment sum, the sum of to-be-transmitted fragments and determined according the request |
| FragmentInfoList | | the list of fragment information consists of the information of multiple fragments |
| | FragmentID[i] | Fragment ID which forms a list of fragment information with fragment version information |
| | FragmentVersion[i] | Fragment version which forms a list of fragment information with the fragment ID |
| | OffSet[i] | Indicating the starting position of the fragment in this message |
| | ValidFrom[i] | The starting time of life time of a fragment, which is optional |
| | ValidTo[i] | The ending time of life time of a fragment, which is optional |
| | FragmentSize[i] | Fragment size, which is optional |
| | FragmentEncoding[i] | Fragment code format, which is optional |
| Other | | Other information associated with the fragments, which is optional |
| MaxRequestNum | | The maximum number of fragments which may be applied by a terminal each time |
| FragmentList | | A list of fragments consists of multiple fragments. The fragments may be directly sent when the ESG server determines that the content of the fragments is less and the fragments are not required to be transmitted in several times. |
| | Fragment data[i] | Detailed fragment information, the content of which is the same as that of the conventional regulation |

The ESG server may arrange a list of fragment information according to the order of the fragment ID or other orders while configuring the list of the fragment information. Preferably, the list of fragment information may be configured by arranging the fragments associated with a program successively. The reasons of configuring the list of fragment information are as follows.

One program is generally associated with multiple fragments, and the fragment IDs associated with the program may be inconsecutive. For example, the fragment IDs associated with Program A may be 1 and 3, while the fragment IDs associated with Program B may be 2, 4 and 5. Therefore, an ESG server may arrange fragment information in a list according to the order easily processed by a terminal while configuring the list of fragment information. Referring to Table 1, in this embodiment, the fragments 1 and 3 associated with Program A are placed successively, while the fragments 2, 4 and 5 associated with Program B are placed successively. The fragment IDs are not simplified placed according to the digit order. In this way, if the terminal requests fragments according to the order of the list, the terminal may acquire all fragment information associated with Program A quickly and display the fragment information associated with Program A to a user.

In addition, in order to control the number of fragments requested by the terminal each time, the ESG server may carry the parameter of the maximum number of fragments which may be applied by the terminal each time (MaxRequestNum) in a response message sent to the terminal. The value of the MaxRequestNum may be set as a static value or may be dynamically adjusted by the ESG server according to its processing condition or the current network condition. For example, the server designates that the MaxRequestNum in this response message is 2. If the network condition and the processing condition of the ESG server are good, the ESG server may designate that the MaxRequestNum in the next response message is 10. The terminal may request fragments, the number of which is within the range of the parameter.

The ESG server may determine whether to transmit the fragments in several times according to the content of the to-be-transmitted fragments. If the fragments are required to be transmitted in several times, the transmission may be performed according to the method in accordance with the embodiment; otherwise, the to-be-transmitted fragments are set in the detailed fragment information field of the FragmentList as shown in Table 2 and transmitted to the terminal.
Process 406: The terminal receives and saves the list of to-be-transmitted fragments from the ESG server.
Process 407: The terminal determines its required fragments according to the received list of the to-be-transmitted fragments, and sends a fragment request message to the ESG server.

In this process, the terminal may determine the fragments which are not saved by itself as the fragments required according to the fragment ID in the list of fragment information and its saved fragment information, or determine its saved fragments, of which the fragment version information does not accord with the fragment version information in the list of fragment information as the fragments required by itself according to fragment ID in the list of the fragments. In this embodiment, because the terminal does not save any ESG fragment, the fragments required by the terminal are all fragments in the list of fragment information.

The fragment request message may include at least one of the list of fragment information required by the terminal and the number of fragments applied from the ESG server in this message. The list of the fragments may include at least one of the fragment ID and fragment version information. The number of fragments applied from the ESG server in this message is unable to exceed the maximum number of fragments which may be applied by the terminal each time.

In this embodiment, because the terminal does not save any fragment, the terminal may request fragments 1 and 3 from the ESG server according to the order of the list of fragment information. The fragment request message sent from the terminal to the ESG server may be configured according to the structure as shown in Table 3:

**Table 3**

| | Field name | Value |
|---|---|---|
| FragmentlnfoList | | |
| | FragmentID[0] | 1 |
| | FragmentVersion[0] | 1.0 |
| | FragmentID[0] | 3 |
| | EragmentVersion[0] | 1.0 |
| EragrnentSum | | 2 |

The signification of each field of Table 3 is shown in Table 4:

**Table 4**

| | Field name | Signification |
|---|---|---|
| FragmentInfoList | | the list of fragment information consists of the information of multiple fragments |
| | FragmentID[i] | Fragment ID, which forms the list of fragment information with the fragment version information |
| | FragmentVersion[i] | Fragment version, which forms the list of fragment information with the fragment ID |
| FragmentSum | | The number of fragments applied from the ESG server in this message, which should be less than or equal to the MaxRequestNum shown in Table 2 |

In this process, the terminal may also request other fragments from the ESG server, but the number of fragments requested is unable to exceed the parameter, i.e. the value of maximum number of fragments which may be applied by the terminal each time.
Process 408: The ESG server arranges the to-be-transmitted fragments according to the request of the terminal.

In this process, the ESG server determines whether the request carries the list of the fragments required by the terminal according to the request sent from the terminal. If the request carries the list of the fragments, it is indicated that the terminal has received its sent list of the to-be-transmitted fragments. The fragments listed in the list of the fragments are the fragments requested from the terminal to the ESG server. The ESG server arranges the to-be-transmitted fragments according to the request of terminal. If the request does not carry the list of the fragments requested by the terminal, it is indicated that this is the first request sent from the terminal to the ESG server or the list of the to-be-transmitted fragments sent from the ESG server is un-received. The ESG server should send the list of the to-be-transmitted fragments to the terminal according to Process 405.
Process 409: The ESG server sends the fragments requested by the terminal to the terminal.

In this process, the message of the fragments sent from the ESG server to the terminal may include at least one of the number of fragments in the message, the list of fragment information included by the message, the list of the fragments, the maximum number of fragments which may be applied by the terminal each time and the list of invalid fragments.

The list of fragment information included by the message includes at least one of ID of a fragment and version information, starting position of a fragment in the message and fragment size. The list of the fragments includes the detailed fragments. The list of invalid fragments includes at least one of the ID of an invalid fragment and version information of the invalid fragment. The fragments listed in the list of the invalid fragments are invalid fragments. Therefore, the terminal may request the fragments listed in the list of fragment information and not listed in the list of the invalid fragments from the ESG server according to the list of fragment information and the list of the invalid fragments.

In this embodiment, suppose that the ESG server determines that at most three fragments may be sent in each message according to the current condition or its own condition, the parameter, i.e. the maximum number of fragments which may be applied by the terminal each time, may be set as 3 in the response message sent to the terminal. The response message for sending the information of the fragments from the ESG server to the terminal may be configured according to the structure as shown in Table 5.

**Table 5**

| | Field name | Value |
|---|---|---|
| FragmentSum | | 2 |
| FragmentInfoList | | |
| | FragmentID[0] | 1 |
| | FragmentVersion[0] | 1.0 |
| | OffSet[0] | 0X001 |
| | Size[0] | 675 |
| | FragmentID[1] | 3 |
| | FragmentVersion[1] | 1.0 |
| | OffSet[1] | 0X002 |
| | Size[1] | 676 |
| FragmentList | | |
| | Fragment data[0] | Fragment content of fragment of which ID=1 |
| | Fragment data[1] | Fragment content of fragment of which ID=3 |
| MaxRequestNum | | 3 |

The signification of each field in Table 5 is shown in Table 6.

**Table 6**

| | Field name | Signification |
|---|---|---|
| FragmentSum | | Fragment sum, the number of the fragments included in the message |
| EragmentInfoList | | The list of fragment information consists of the information of multiple fragments in the message. |
| | FragmentID[i] | Fragment ID, which forms the list of fragment information with the fragment version information |
| | FragmentVersion[i] | Fragment version, which forms the list of fragment information with fragment ID |
| | OffSet[i] | Indicating the starting position of a fragment in this message |
| | Size[i] | Fragment size |
| FragmentList | | The list of the fragments consists of multiple fragments |
| | Fragment data[i] | Detailed fragment, the content of which is the same as that of the conventional regulation |
| | MaxRequestNum | The maximum number of fragments that may be applied by the terminal each time |
| InvalidFragmentlnfoList | | The list of invalid fragments which consists of the information of multiple fragments.The list of the invalid fragments indicates the invalid fragments in the list of fragment information within the time period from receiving the list of fragment information to requesting fragments by the terminal. The list is an optional parameter. |
| | FragmentID[i] | Fragment ID, which forms the list of fragment information with the fragment version information |
| | FragmentVersion[i] | Fragment version, which forms the list of fragment information together with fragment ID |

Process 410: The terminal receives the fragments sent from the ESG server, and examines the integrity and the correctness of the received fragments according to the fragment request message sent to the ESG server in Process 407. If the terminal receives its requested fragment completely and correctly, Process 411 is performed; otherwise, Process 407 is performed to retransmit the last request sent to the ESG server.
Process 411: Determine whether to exhibit the ESG fragments partially. If the ESG fragments may be partially exhibited, Process 412 is performed; otherwise, Process 407 is performed to continue requesting fragments.
Process 412: A portion of the ESG fragments is exhibited to the user.
Process 413: It is determined whether the transmission of all fragments required by the terminal has been finished according to the list of fragment information saved in Process 406 and the fragments saved by the terminal locally. If the transmission is finished, the procedure is terminated; otherwise, Process 407 is performed to continue requesting a fragment.

Up to now, the procedure for transmitting an ESG in accordance with the first embodiment is implemented.

Referring to Figure 4, the method for examining the integrity and correctness of the fragments, determining whether to exhibit the ESG fragments partially, and exhibiting the ESG fragments to the user is not further described.

As can be seen from the above embodiment, a terminal may request a complete ESG while requesting an ESG from an ESG server. The ESG server sends to the terminal the list of the to-be-transmitted fragments according to the request of the terminal. The list of the to-be-transmitted fragments includes the information of all to-be-transmitted fragments. The terminal requests designated fragments from the ESG server according to the list of the to-be-transmitted fragments received from the ESG server. The ESG server sends the fragments required by the terminal to the terminal in several times according to the request of the terminal. In this way, the fragments are transmitted to the terminal in several times, so that the transmission of a large number of data from the ESG server to the terminal once is avoided which improves the reliability and efficiency of the transmission.

### The second embodiment:

In this embodiment, a terminal first sends a condition searching request to an ESG server to search an ESG meeting a condition. The terminal designates its required fragments each time while requesting fragments from the ESG server according to the list of the to-be-transmitted fragments. The list is returned by the ESG server.

The basic processes of the method for transmitting an ESG in this embodiment are identical with that as shown in Figure 4 of the first embodiment. Therefore, refer to Figure 4 for the flowchart of this embodiment. The method for transmitting an ESG in this embodiment includes the following processes.
From Process 401 to Process 402: A terminal initiates mobile video software, and acquires the address of an ESG server.
Process 403: The terminal sends a condition searching request to the ESG server to search program information meeting a specific condition.
Process 404: The ESG server receives the request of the terminal.
Process 405: The ESG server determines to-be-transmitted fragments according the condition searching request of the terminal, configures and sets a list of the to-be-transmitted fragments in a response message with the information of the to-be-transmitted fragments, and sends the response message to the terminal. In this embodiment, suppose that the to-be-transmitted fragments are identical with that of the first embodiment, the ESG server may configure a list of the to-be-transmitted fragments according to the method in Process 405 of the first embodiment, carry the configured list of the to-be-transmitted fragments in a response message, and send the response message to the terminal.
Process 406: The terminal receives and saves the list of the to-be-transmitted fragments from the ESG server.
Process 407: The terminal determines its required fragments according to the received list of the to-be-transmitted fragments, and sends a fragment request message to the ESG server. In this embodiment, suppose that the terminal determines that it has saved fragments 2, 4 and 5 by comparing the list of the fragments with the fragments saved by the terminal locally. Therefore, the terminal determines to request fragments 1 and 3 from the ESG server. In this process, the terminal may configure the fragment request message according to the method in Process 407 of the first embodiment.
Process 408: The ESG server arranges the to-be-transmitted fragments according to the request of the terminal.
Process 409: The ESG server sends the fragments requested by the terminal to the terminal.

In this process, suppose that the ESG server determines that at most three fragments may be sent in each message according to the current network condition or its own condition, the parameter, i.e. the maximum number of fragments which may be applied by the terminal each time, may be set as 3 in the response message sent to the terminal. The ESG server determines that Fragment 1 is invalid according to certain reasons. Therefore, Fragment 1 is not required to be sent to the terminal. Therefore, the ESG server may carry the information indicating an invalid fragment, for example the invalid fragment ID and version information in the response message returned to the terminal. The response message of the fragment information sent from the ESG server to the terminal may be configured according to the structure as shown in Table 7.

**Table 7**

| | Field name | Value |
|---|---|---|
| FragmentSum | | 1 |
| FragmentInfoList | | |
| | FragmentID[0] | 3 |
| | FragmentVersion[0] | 1.0 |
| | OffSet[0] | 0X001 |
| | Size[0] | 676 |
| FragmentList | | |
| | Fragment data[0] | The fragment content of the fragment with ID=3 |
| MaxRequestNum | | 3 |
| InvalidFragmentInfoList | | |
| | FragmentID[0] | 1 |
| | FragmentVersion[3] | 1.0 |

The signification of each field of Table 7 is same as the signification of the corresponding field in Table 6. The InvalidFragmentInfoList is the list of the information of invalid fragments. The InvalidFragmentInfoList may be composed of the invalid fragment ID and version information.

The operation for examining the integrity and correctness of fragments and exhibiting the ESG information partially in Processes 410∼413 of this embodiment is identical with that of the first embodiment. Refers to the relative processes described in the first embodiment. The relative processes will not be further described herein.

Up to now, the procedure for transmitting an ESG in accordance with the second embodiment is implemented.

As can be seen from the above embodiment, a terminal may request an ESG meeting a designated condition via a condition searching request when requesting the ESG from an ESG server. The ESG server sends to the terminal a list of the to-be-transmitted fragments according to the request of terminal. The list of the to-be-transmitted fragments includes the information of all to-be-transmitted fragments. The terminal requests designated fragments from the ESG server according to the list of the to-be-transmitted fragments received from the ESG server. The ESG server sends the fragments required by the terminal to the terminal in several times according to the request of terminal. In this way, the fragments are transmitted to the terminal in several times, which avoids transmitting a large number of data to a terminal one time and improves the reliability and efficiency of the transmission.

In addition, in this embodiment, the ESG server carries the information of invalid fragments in the list of the to-be-transmitted fragments while sending the list of the to-be-transmitted fragments to the terminal. It is avoided that the terminal requests the invalid fragments in the list of the to-be-transmitted fragments, so that resources are saved.

### The third embodiment:

In this embodiment, a terminal first requests a complete ESG from an ESG server. When the terminal requests fragments from the ESG server according to the list of to-be-transmitted fragments returned by the ESG server, the terminal merely sends one fragment request message to notify the ESG server of fragments saved by the terminal, the information of the fragments which are not saved by the terminal, or the number of fragments which the terminal requests the ESG server to return. The ESG server determines to-be-transmitted fragments to the terminal. After receiving a fragment sent by the ESG server each time, the terminal returns an acknowledgement message to the ESG server.

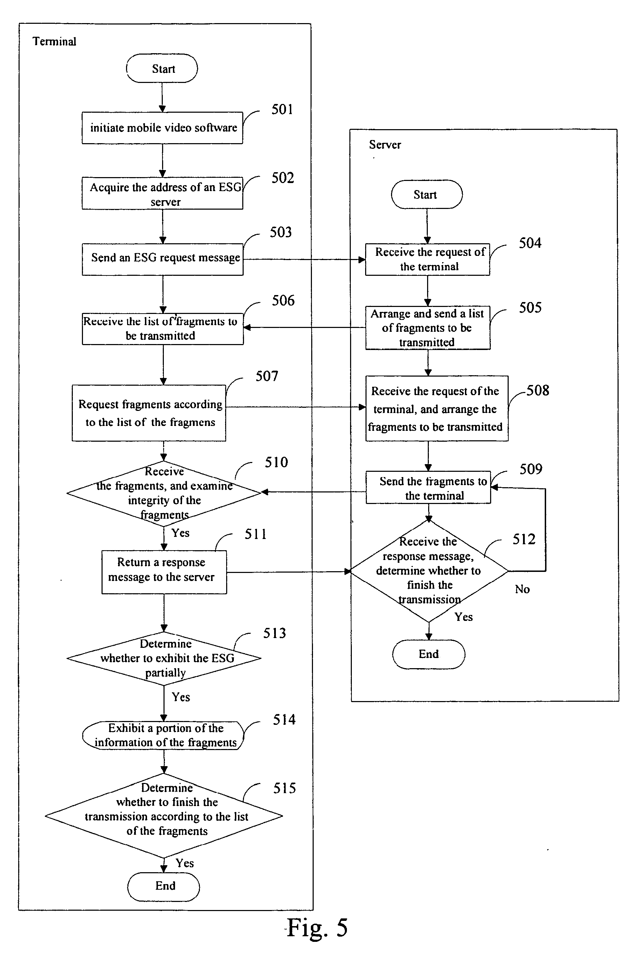

Figure 5 is a simplified flowchart illustrating a inventive method for transmitting an ESG in accordance with the third embodiment. Referring to Figure 5, the method includes the processing of a terminal and an ESG server. Particularly, the processing includes the following processes.

The operation of Processes 501 ∼ 504 is identical with the operation of Processes 401 ~ Step 404 in the first embodiment. Refer to relative processes described in the first embodiment. The relative processes will not be further described herein.
Process 505: The ESG server sends to the terminal a list of to-be-transmitted fragments. The list of the to-be-transmitted fragments carries a Session ID parameter to identify one terminal request.
Process 506: The terminal receives and saves the list of the to-be-transmitted fragments sent from the ESG server.
Process 507: The terminal sends a fragment request message to the ESG server according to the received list of the to-be-transmitted fragments. In this embodiment, when the terminal requests fragments from the ESG server, the terminal designates the number of fragments that the terminal requests the ESG server to return and the information of fragments saved by the terminal locally, and not designates its required fragments. Therefore, the fragment request message sent from the terminal to the ESG server may include at least one of session ID, the list of fragments required by the terminal, the number of fragments returned by the ESG server in this request, and the feedback of receiving condition.

The list of fragments required by the terminal may include at least one of message property parameter, fragment ID and version information.

There are two values of the message property parameter. The first value indicates that fragments listed in the list have been saved by the terminal locally, i.e. the fragments are not required to be issued by the ESG server. The second value indicates that fragments listed in the list have not been saved by the terminal locally, i.e. the fragments are required to be issued by the ESG server. The two values of the message property parameter may be distinguished by two digits respectively. For example, such two characters may be indicated by 1 and 2 respectively.

The feedback of receiving condition may be classified into three types. The first type indicates that the terminal has received the message sent from the ESG server successfully. The second type indicates that the last response message is required to be retransmitted by the ESG server. The third type indicates others. The three types may be distinguished with three digits respectively. For example, the three types may be indicated with 1, 2 and 3 respectively.

The fragment request message sent from the terminal to the ESG server may be configured according to the structure as shown in Table 8.

**Table 8**

| Field name | Signification |
|---|---|
| SessionID | Session ID indicating one request |
| EragmentlnfoList | The list of fragment information consisting of the information of multiple fragments |
| FragmentInfoFlag | Indicating the character of the list of fragment information, for example, |
| | 1: Indicate that fragments listed in the list of fragment information have been saved by the terminal locally, i.e. the fragments are not required to be transmitted by the ESG server |
| | 2: Indicate that fragments listed in the list of fragment information have not been saved by the terminal locally, i.e. the fragments are required to be transmitted by the ESG server |
| FragmentID[i] | Fragment ID, which forms a list of fragment information together with the fragment version information |
| FragmentVersion[i] | Fragment version, which forms a list of fragment information together with fragment ID |
| FragmentSum | The number of fragments which are required to be returned by the ESG server in this request, the value of which should be less than or equal to MaxRequestNum. |
| STAUS | Feedback of receiving condition |
| | 1: Indicate that the terminal has received the message issued by the ESG server successfully |
| | 2: Indicate that it is necessary for the ESG server to retransmit the last transmitted message |
| | 3: Others |

Process 508: The ESG server arranges to-be-transmitted fragments according to the fragment request message received from the terminal.
Process 509: The ESG server sends the fragments requested by the terminal to the terminal. In this process, the ESG server carries a Session ID parameter in the response message of fragment information sent from the ESG server to the terminal, so as to indicate one request.
Process 510: The terminal examines the integrity and correctness of the received fragments. If the requested fragments have been received completely and correctly, Process 511 is performed.
Process 511: The terminal returns an acknowledgement message to the ESG server.
Process 512: The ESG server determines whether the transmission of ESG fragments has been completed after receiving the acknowledgement message returned by the terminal. If the transmission has been finished, the procedure is terminated; otherwise, the operation of transmitting fragments to the terminal according to the list of the fragments, in Process 509 is performed. Fragments which are not sent to the terminal in the list of fragment information are sent to the terminal.
Process 513: Determine whether to exhibit the information of ESG fragments partially. If the information of ESG fragments may be exhibited partially, the terminal proceeds to Process 514; otherwise, the terminal continues to wait for fragments sent by the ESG server.
Process 514: A portion of the information of ESG fragments is exhibited to a user.
Process 515: Determine whether the transmission of all fragments has been finished according to the list of fragments saved in Process 506 and fragments saved by the terminal locally. If the transmission has been finished, terminate the procedure; otherwise, continue to wait for fragments sent from the ESG server.

Referring to Figure 5, the method for examining the integrity and correctness of fragments, determining whether to exhibit the information of ESG fragments partially, and exhibiting the information of ESG fragments to the user will not be further described.

Up to now, the procedure for transmitting an ESG in accordance with the third embodiment is implemented.

As can be seen from the above embodiment, when a terminal requests an ESG from an ESG server, the ESG server sends to the terminal a list of to-be-transmitted fragments. The list of to-be-transmitted fragments includes the information of all to-be-transmitted fragments. The terminal requests designated fragments from the ESG server according to the list of the to-be-transmitted fragments. The ESG server sends the fragments required by the terminal to the terminal in several times according to the request of terminal. In this way, the fragments are transmitted to the terminal in several times, so that transmitting a large number of data from the ESG server to the terminal once is avoided, which improves the reliability and efficiency of the transmission

In addition, in this embodiment, the terminal merely sends one fragment request message to the ESG server, and designates the number of fragments which may be received by the terminal and the information of fragments saved by the terminal locally in the fragment request message. In this way, on the one hand, the terminal is not required to designate fragments each time, so as to simplify the processing of the terminal. On the other hand, because the order for transmitting fragments are managed by the ESG server, the ESG server may carry relative fragments in one message and send the message to the terminal, so that the terminal may exhibit the ESG to the user conveniently.

## Claims

1. A method for transmitting an Electronic Service Guide, ESG, from a server to a terminal comprising:
receiving an ESG request message sent from the terminal;
sending a list of to-be-transmitted fragments which is configured according to information of the to-be-transmitted fragments to the terminal, wherein the list of to-be-transmitted fragments comprises a list of fragment information and a session ID, wherein the session ID is used for identifying the ESG request message sent from the terminal;
receiving one fragment request message sent from the terminal;
determining by the server fragments required by the terminal;
sending the fragments required by the terminal to the terminal;
and **characterized in that** the fragment request message carries the IDs of fragments which are not held by the terminal and the session ID, or carries the IDs of fragments which are saved by the terminal and the session ID, and the step of determining by the server fragments required by the terminal comprises:
searching the list of fragment information; and
determining by the server the fragments required by the terminal according to the session ID, and at least one of the IDs of fragments which are not held by the terminal and the IDs of fragments which are saved by the terminal; and after the process of sending the fragments required by the terminal to the terminal, the method further comprises:
receiving, by the server, an acknowledgement message returned by the terminal;
determining whether the transmission of the fragments required by the terminal has been completed after receiving the acknowledgement message;
if the transmission of fragments has not been finished, proceed to the process of sending the fragments required by the terminal to the terminal, so that the fragments which are not sent to the terminal in the list of fragment information are sent to the terminal.

2. The method of Claim 1, wherein the step of sending the fragments required by the terminal to the terminal comprises:
sending the fragments required by the terminal to the terminal in several times.

3. The method of Claim 1, wherein the fragment request message further carries the number of fragments that the terminal requires the server to return; and
the step of determining by the server fragments required by the terminal comprises:
determining that the number of the fragments required by the terminal equals to the number of fragments carried in the fragment request message.

4. The method of Claim 2, further comprising:
setting to-be-transmitted fragments which are associated with a program in the list of fragment information successively; wherein
the step of sending the fragments required by the terminal to the terminal in several times comprises;
sending the fragments required by the terminal to the terminal in several times, wherein the order of the fragments required by the terminal accords with the order of the fragments set in the list of fragment information.

5. The method of Claim 1, further comprising:
sending at least one of IDs of the fragments, version information of the fragments, starting positions of the fragments, fragment size, number of fragments received at this time.

6. The method of any of Claims 1 to 5, wherein the step of receiving an ESG request message sent from a terminal comprises:
receiving a request message for acquiring a complete ESG from the terminal.

7. An Electronic Service Guide, ESG, server (210), comprising:
a first communicating module (211), configured to receive an ESG request message and one fragment request message from a terminal (220);
a first request processing module (212), configured to search a first data storing module (213) to obtain information of to-be-transmitted fragments according to the ESG request message, and send the information of to-be-transmitted fragments to a first fragment processing module (214); and search the first data storing module (213) to determine the fragments required by the terminal (220) according to the fragment request message, and send the fragments required by the terminal (220) via the first communicating module (211);
the first data storing module (213), configured to store the fragments,
the first fragment processing module (214), configured to configure a list of to-be-transmitted fragments according to the information of to-be-transmitted fragments, wherein the list of to-be-transmitted fragments comprises a list of fragment information and a session ID, wherein the session ID is used for identifying the ESG request message sent from the terminal (220), and send the list of the to-be-transmitted fragments via the first communicating module (211);
and **characterized in that** the fragment request message carries the IDs of fragments which are not held by the terminal (220) and the session ID, or carries the IDs of fragments which are saved by the terminal (220) and the session ID, and the first request processing module (212) configured to search the first data storing module (213) to determine the fragments required by the teminal (220) according to the fragment request message is further configured:
to search the list of fragment information; and
to determine the fragments required by the terminal (220) according to the session ID, and at least one of the IDs of fragments which are not held by the terminal (220) and the IDs of fragments which are saved by the terminal (220); and
the server (210) further comprises a unit which is configured to receive an acknowledgement message returned by the terminal (220), and a unit which is configured to determine whether the transmission of the fragments required by the terminal (220) has been completed after receiving the acknowledgement message; and
the first request processing module (212) is further configured to send the fragments required by the terminal (220) if the transmission of fragments has not been finished, so that the fragments which are not sent to the terminal (220) in the list of fragment information are sent to the terminal (220).

8. The ESG server of Claim 7, wherein
the first request processing module (212) is further configured to send the fragments required by the terminal (220) via the first communicating module (211) in several times.

9. A system for transmitting an Electronic Service Guide, ESG, comprising: a terminal, configured to send a fragment request message to request fragments required by the terminal and an ESG request message to request an ESG; and
an ESG server according to any one of claims 7-8.

## Patentansprüche

1. Verfahren zum Übertragen eines Electronic Service Guide ESG von einem Server zu einem Endgerät, mit den folgenden Schritten:
Empfangen einer von dem Endgerät gesendeten ESG-Anforderungsnachricht;
Senden einer Liste von zu übertragenden Fragmenten, die gemäß Informationen der zu übertragenden Fragmente zu dem Endgerät konfiguriert ist, wobei die Liste von zu übertragenden Fragmenten eine Liste von Fragmentinformationen und eine Sitzungs-ID umfasst, wobei die Sitzungs-ID zum Identifizieren der von dem Endgerät gesendeten ESG-Anforderungsnachricht verwendet wird;
Empfangen einer von dem Endgerät gesendeten Fragmentanforderungsnachricht;
Bestimmen von von dem Endgerät erforderten Fragmenten durch den Server;
Senden der von dem Endgerät erforderten Fragmente zu dem Endgerät;
und **dadurch gekennzeichnet, dass** die Fragmentanforderungsnachricht die IDs von Fragmenten, die nicht durch das Endgerät gehalten werden, und die Sitzungs-ID führt oder die IDs von Fragmenten, die durch das Endgerät abgespeichert sind, und die Sitzungs-ID führt und der Schritt des Bestimmens von von dem Endgerät erforderten Fragmenten durch den Server Folgendes umfasst:
Durchsuchen der Liste von Fragmentinformationen; und
Bestimmen der von dem Endgerät erforderten Fragmente durch den Server gemäß der Sitzungs-ID und mindestens einer der IDs von Fragmenten, die nicht durch das Endgerät gehalten werden, und der IDs von Fragmenten, die durch das Endgerät abgespeichert sind; und das Verfahren nach dem Prozess des Sendens der von dem Endgerät erforderten Fragmente zu dem Endgerät ferner Folgendes umfasst:
Empfangen einer durch das Endgerät zurückgegebenen Bestätigungsnachricht durch den Server;
Bestimmen, ob die Übertragung der von dem Endgerät erforderten Fragmente abgeschlossen wurde, nachdem die Bestätigungsnachricht empfangen wird;
wenn die Übertragung von Fragmenten nicht beendet wurde, Weitergehen zu dem Prozess des Sendens der von dem Endgerät erforderten Fragmente zu dem Endgerät dergestalt, dass die Fragmente, die nicht zu dem Endgerät gesendet werden, in der Liste von Fragmentinformationen zu dem Endgerät gesendet werden.

2. Verfahren nach Anspruch 1, wobei der Schritt des Sendens der von dem Endgerät erforderten Fragmente zu dem Endgerät Folgendes umfasst:
Senden der von dem Endgerät erforderten Fragmente zu dem Endgerät in mehreren Malen.

3. Verfahren nach Anspruch 1, wobei die Fragmentanforderungsnachricht ferner die Anzahl der Fragmente führt, die das Endgerät von dem Server erfordert, zurückzugeben; und
der Schritt des Bestimmens von von dem Endgerät erforderten Fragmenten durch den Server Folgendes umfasst:
Bestimmen, dass die Anzahl der von dem Endgerät erforderten Fragmente gleich der in der Fragmentanforderungsnachricht geführten Anzahl von Fragmenten ist.

4. Verfahren nach Anspruch 2, ferner mit den folgenden Schritten:
sukzessives Setzen von zu übertragenden Fragmenten, die mit einem Programm in der Liste von Fragmentinformationen assoziiert sind; wobei
der Schritt des Sendens der von dem Endgerät erforderten Fragmente zu dem Endgerät in mehreren Malen Folgendes umfasst:
Senden der von dem Endgerät erforderten Fragmente zu dem Endgerät in mehreren Malen, wobei die Reihenfolge der von dem Endgerät erforderten Fragmente der in der Liste von Fragmentinformationen gesetzten Reihenfolge der Fragmente entspricht.

5. Verfahren nach Anspruch 1, ferner mit dem folgenden Schritt:
Senden mindestens einer der Alternativen IDs der Fragmente, Versionsinformationen der Fragmente, Startpositionen der Fragmente, Fragmentgröße, Anzahl der dieses Mal empfangenen Fragmente.

6. Verfahren nach einem der Ansprüche 1 bis 5, wobei der Schritt des Empfangens einer von einem Endgerät gesendeten ESG-Anforderungsnachricht Folgendes umfasst:
Empfangen einer Anforderungsnachricht zum Beschaffen eines vollständigen ESG von dem Endgerät.

7. Server (210) für den Electronic Service Guide ESG, umfassend:
ein erstes Kommunikationsmodul (211), das dafür ausgelegt ist, eine ESG-Anforderungsnachricht und eine Fragmentanforderungsnachricht von einem Endgerät (220) zu empfangen;
ein erstes Anforderungsverarbeitungsmodul (212), das dafür ausgelegt ist, ein erstes Datenspeichermodul (213) zu durchsuchen, um Informationen von zu übertragenden Fragmenten gemäß der ESG-Anforderungsnachricht zu erhalten und die Informationen von zu übertragenden Fragmenten zu einem ersten Fragmentverarbeitungsmodul (214) zu senden; und das erste Datenspeichermodul (213) zu durchsuchen, um die von dem Endgerät (220) erforderten Fragmente gemäß der Fragmentanforderungsnachricht zu bestimmen und die von dem Endgerät (220) erforderten Fragmente über das erste Kommunikationsmodul (211) zu senden;
das erste Datenspeichermodul (213), das dafür ausgelegt ist, die Fragmente zu speichern,
das erste Fragmentverarbeitungsmodul (214), das dafür ausgelegt ist, eine Liste von zu übertragenden Fragmenten gemäß den Informationen von zu übertragenden Fragmenten zu konfigurieren, wobei die Liste von zu übertragenden Fragmenten eine Liste von Fragmentinformationen und eine Sitzungs-ID umfasst, wobei die Sitzungs-ID zum Identifizieren der von dem Endgerät (220) gesendeten ESG-Anforderungsnachricht verwendet wird, und die Liste der zu übertragenden Fragmente über das erste Kommunikationsmodul (211) zu senden;
und **dadurch gekennzeichnet, dass** die Fragmentanforderungsnachricht die IDs von Fragmenten, die nicht durch das Endgerät (220) gehalten werden, und die Sitzungs-ID führt oder die IDs von Fragmenten, die durch das Endgerät (220) abgespeichert sind, und die Sitzungs-ID führt und das erste Anforderungsverarbeitungsmodul (212) dafür ausgelegt ist, das erste Datenspeichermodul (213) zu durchsuchen, um die von dem Endgerät (220) erforderten Fragmente gemäß der Fragmentanforderungsnachricht zu bestimmen, und ferner dafür ausgelegt ist,
die Liste von Fragmentinformationen zu durchsuchen; und
die von dem Endgerät (220) erforderten Fragmente gemäß der Sitzungs-ID und mindestens einer der IDs von Fragmenten, die nicht durch das Endgerät (220) gehalten werden, und der IDs von Fragmenten, die durch das Endgerät (220) abgespeichert sind, zu bestimmen; und
der Server (210) ferner Folgendes umfasst: eine Einheit, die dafür ausgelegt ist, eine durch das Endgerät (220) zurückgegebene Bestätigungsnachricht zu empfangen, und eine Einheit, die dafür ausgelegt ist, zu bestimmen, ob die Übertragung der von dem Endgerät (220) erforderten Fragmente abgeschlossen wurde, nachdem die Bestätigungsnachricht empfangen wurde; und
das erste Anforderungsverarbeitungsmodul (212) ferner dafür ausgelegt ist, die von dem Endgerät (220) erforderten Fragmente zu senden, wenn die Übertragung von Fragmenten nicht beendet wurde, so dass die Fragmente, die nicht zu dem Endgerät (220) gesendet sind, in der Liste von Fragmentinformationen zu dem Endgerät (220) gesendet werden.

8. ESG-Server nach Anspruch 7, wobei
das erste Anforderungsverarbeitungsmodul (212) ferner dafür ausgelegt ist, die von dem Endgerät (220) erforderten Fragmente über das erste Kommunikationsmodul (211) in mehreren Malen zu senden.

9. System zum Übertragen eines Electronic Service Guide ESG, umfassend:
ein Endgerät, das dafür ausgelegt ist, eine Fragmentanforderungsnachricht zum Anfordern von von dem Endgerät erforderten Fragmenten und eine ESG-Anforderungsnachricht zum Anfordern eines ESG zu senden; und
einen ESG-Server nach einem der Ansprüche 7-8.

## Revendications

1. Procédé de transmission d'un guide de service électronique, GSE, depuis un serveur vers un terminal, comprenant les étapes consistant à :
recevoir un message de demande de GSE envoyé depuis le terminal ;
envoyer une liste de fragments à transmettre qui est configurée selon des informations des fragments à transmettre au terminal, où la liste des fragments à transmettre comprend une liste d'informations de fragment et un identifiant de session, où l'identifiant de session est utilisé pour identifier le message de demande de GSE envoyé depuis le terminal ;
recevoir un message de demande de fragments envoyé depuis le terminal ;
déterminer, au niveau du serveur, les fragments demandés par le terminal ;
envoyer les fragments demandés par le terminal au terminal ;
et **caractérisé en ce que** le message de demande de fragments achemine les identifiants des fragments qui ne sont pas détenus par le terminal et l'identifiant de session, ou achemine les identifiants des fragments qui sont enregistrés par le terminal et l'identifiant de session, et l'étape consistant à déterminer, au niveau du serveur, les fragments demandés par le terminal comprend les étapes consistant à :
rechercher la liste d'informations de fragment ; et
déterminer, au niveau du serveur, les fragments demandés par le terminal selon l'identifiant de session, et au moins un des identifiants de fragments qui ne sont pas détenus par le terminal et les identifiants de fragments qui sont enregistrés par le terminal ; et, après le processus d'envoi des fragments demandés par le terminal au terminal, le procédé comprend en outre les étapes consistant à :
recevoir, au niveau du serveur, un message d'accusé de réception retourné par le terminal ;
déterminer si la transmission des fragments demandés par le terminal s'est achevée après réception du message d'accusé de réception ;
si la transmission des fragments ne s'est pas achevée, poursuivre le processus d'envoi des fragments demandés par le terminal au terminal, de manière à ce que les fragments qui ne sont pas envoyés au terminal dans la liste des informations de fragment soient envoyés au terminal.

2. Procédé selon la revendication 1, dans lequel l'étape d'envoi des fragments demandés par le terminal au terminal comprend l'étape consistant à :
envoyer les fragments demandés par le terminal au terminal en plusieurs fois.

3. Procédé selon la revendication 1, dans lequel le message de demande de fragments achemine en outre le nombre de fragments que le terminal demande au serveur de retourner ; et
l'étape consistant à déterminer, au niveau du serveur, les fragments demandés par le terminal, comprend l'étape consistant à :
déterminer que le nombre des fragments demandés par le terminal est égal au nombre de fragments acheminés dans le message de demande de fragments.

4. Procédé selon la revendication 2, comprenant en outre les étapes consistant à :
définir les fragments à transmettre qui sont associés à un programme dans la liste d'informations de fragment, de manière successive ; où
l'étape d'envoi des fragments demandés par le terminal au terminal en plusieurs fois comprend l'étape consistant à :
envoyer les fragments demandés par le terminal au terminal en plusieurs fois, où l'ordre des fragments demandés par le terminal est conforme à l'ordre des fragments défini dans la liste d'informations de fragment.

5. Procédé selon la revendication 1, comprenant en outre l'étape consistant à :
envoyer au moins un élément parmi les identifiants des fragments, les informations de version des fragments, les positions de départ des fragments, la taille des fragments, le nombre de fragments reçus à cet instant donné.

6. Procédé selon l'une quelconque des revendications 1 à 5, dans lequel l'étape de réception d'un message de demande de GSE envoyé depuis un terminal comprend l'étape consistant à :
recevoir un message de demande pour acquérir un GSE complet depuis le terminal.

7. Serveur de guide de service électronique, GSE, (210) comprenant :
un premier module de communication (211) configuré pour recevoir un message de demande de GSE et un message de demande de fragments depuis un terminal (220) ;
un premier module de traitement de demandes (212) configuré pour rechercher un premier module de stockage de données (213) pour obtenir des informations de fragments à transmettre selon le message de demande de GSE, et envoyer les informations des fragments à transmettre à un premier module de traitement de fragments (214) ; et rechercher le premier module de stockage de données (213) pour déterminer les fragments demandés par le terminal (220) selon le message de demande de fragments, et envoyer les fragments demandés par le terminal (220) via le premier module de communication (211) ;
le premier module de stockage de données (213), configuré pour stocker les fragments,
le premier module de traitement de fragments (214), configuré pour configurer une liste de fragments à transmettre selon les informations des fragments à transmettre,
où la liste des fragments à transmettre comprend une liste d'informations de fragment et un identifiant de session, où l'identifiant de session est utilisé pour identifier le message de demande de GSE envoyé depuis le terminal (220), et envoyer la liste des fragments à transmettre via le premier module de communication (211) ;
et **caractérisé en ce que** le message de demande de fragments achemine les identifiants des fragments qui ne sont pas détenus par le terminal (220) et l'identifiant de session, ou achemine les identifiants des fragments qui sont enregistrés par le terminal (220) et l'identifiant de session, et le premier module de traitement de demandes (212) est configuré pour rechercher le premier module de stockage de données (213) pour déterminer les fragments demandés par le terminal (220) selon le message de demande de fragments,
et est en outre configuré pour rechercher la liste des informations de fragment ; et
pour déterminer les fragments demandés par le terminal (220) selon l'identifiant de session, et au moins un des identifiants des fragments qui ne sont pas détenus par le terminal (220) et les identifiants de fragments qui sont enregistrés par le terminal (220) ; et
le serveur (210) comprend en outre une unité qui est configurée pour recevoir un message d'accusé de réception retourné par le terminal (220) et une unité qui est configurée pour déterminer si la transmission des fragments demandés par le terminal (220) s'est achevée après réception du message d'accusé de réception ; et
le premier module de traitement de demandes (212) est en outre configuré pour envoyer les fragments demandés par le terminal (220) si la transmission des fragments ne s'est pas achevée, de manière à ce que les fragments qui ne sont pas envoyés au terminal (220) dans la liste des informations de fragment soient envoyés au terminal.

8. Serveur de GSE selon la revendication 7, dans lequel :
le premier module de traitement de demandes (212) est en outre configuré pour envoyer les fragments demandés par le terminal (220) via le premier module de communication (211) en plusieurs fois.

9. Système de transmission d'un guide de service électronique, GSE, comprenant : un terminal, configuré pour envoyer un message de demande de fragments pour demander des fragments demandés par le terminal, et un message de demande de GSE pour demander un GSE ; et
un serveur de GSE selon l'une quelconque des revendications 7 à 8.
